# EUROPEAN PATENT SPECIFICATION

(11) **EP 1 698 119 B1**
(45) Date of publication and mention of the grant of the patent: **29.08.2012**
(21) Application number: 04800268.7
(22) Date of filing: 05.11.2004
(51) Int. Cl.: H04L 12/56, H04L 12/24, H04L 12/26

(54) **A METHOD FOR CONTROLLING THE FORWARDING QUALITY IN A DATA NETWORK**
VERFAHREN ZUR STEUERUNG DER WEITERLEITUNGSQUALITÄT IN EINEM DATENNETZWERK
PROCEDE PERMETTANT DE REGULER LA QUALITE D'ACHEMINEMENT DANS UN RESEAU DE DONNEES

(30) Priority: 22.12.2003 US 530900 P; 22.12.2003 SE 0303466
(43) Date of publication of application: 06.09.2006
(73) Proprietor: NetSocket, Inc., Plano, TX 75025 (US)
(72) Inventor: BODIN, Ulf, S-973 32 Lule (SE); SCHELÉN, Olov, S-945 91 Norrfjärden (SE)
(74) Representative: Epping - Hermann - Fischer
(86) International application number: PCT/SE2004/001605
(87) International publication number: WO 2005/062555

(56) References cited:
- WO-A1-03/021888
- WO-A1-03/075527
- WO-A1-03/085514
- WO-A2-02/05068
- US-A1- 2003 091 165

## Description

### TECHNICAL FIELD OF THE INVENTION

The present invention relates to a method, a node and a computer program in a data network for controlling forwarding quality comprising measuring end-to-end forwarding quality in measurement nodes located outside the network core and detecting forwarding quality violations in at least one path between these nodes.

### BACKGROUND OF THE INVENTION AND RELATED ART

In recent years, asynchronous networks such as Internet Protocol (IP) and Asynchronous Transfer Mode (ATM) have become tremendously popular. These networks interconnect various lower layer networks (e.g., Ethernet, SONET, SDH, ADS L, etc.) to provide connectivity between end-points. In particular, the Internet has evolved to a global multi service network through which a great span of different applications communicate (e.g., web browsing, email, telephony, media streaming, video conferencing, etc.).

In asynchronous networks, differentiated forwarding services can be created. While ATM offers multiple forwarding services (e.g., available bit-rate (ABR), constant bit-rate (CBR), etc.), IP networks has traditionally only offered one forwarding service (i.e., the best-effort service). Formal support for differentiated services has however recently been added to the Internet architecture and Internet Service Providers (ISPs) can thereby configure their IP networks for multiple forwarding services. Configuring an asynchronous network for multiple services, of which some provides guarantees or assurances on the forwarding quality offered to users, means to divide forwarding resources such as buffer capacity and forwarding capacity into different classes or pipes. Then, for classes or pipes that will carry traffic for which absolute guarantees or assurances shall be given (i.e., in contrast to relative guarantees or assurances), the admission to those needs to be controlled. We refer to this as admission control. Note that admission control can be used also to maintain guarantees or assurances in single service networks.

### End-to-end measurements

End-to-end measurements are generally divided into active and passive measurements. While active measurements means to explicitly inject traffic that does not carry any application data into the network, passive measurements are made by observing the quality experienced by application data streams. Common for these end-to-end measurement types is that (as the name suggests) all actions are taking place outside the network core. Typically, end-to-end measurements are made between access networks being well provisioned. They may even be made by applications, which report their perceived quality to a system collecting measurement results.

For both active and passive end-to-end measurements accurate timing of packets' network entrances and departures are needed to determine delay and delay variation (commonly referred to as jitter). Such accuracy can be achieved using GPS (Global Positioning System) clocks located at network ingresses and egresses. In contrast to delay metrics, loss-rates are considerable easier to measure. By providing packets with sequence numbers packet loss can be detected (e.g., RTP (Real-Time Transport Protocol) provides sequence numbers for traffic using the UDP (User Datagram Protocol) transport protocol and TCP (Transmission Control Protocol) includes sequence numbering for transferred bytes).

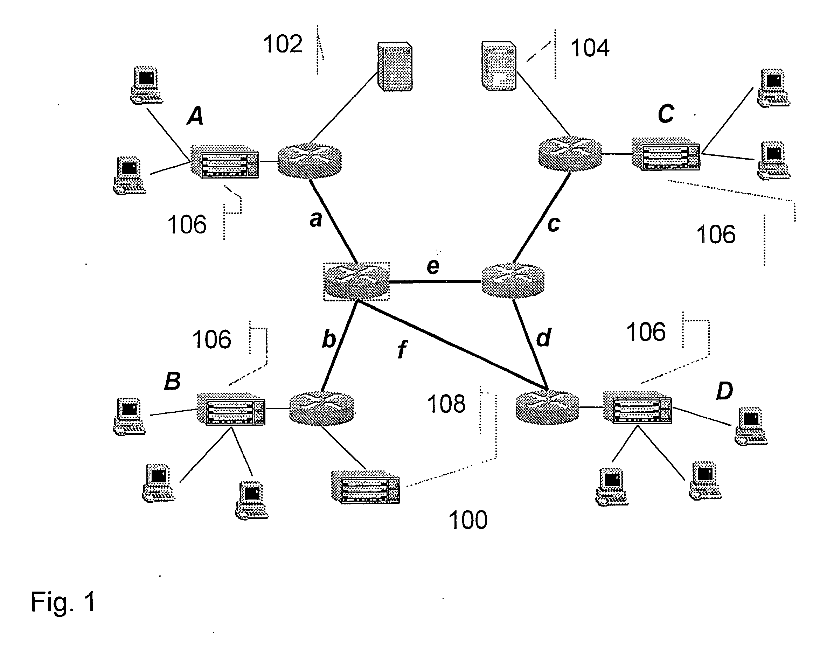

The measurement system provided by Ipanema, www.ipanematech.com, is an example of a passive measurement system that used GPS clocks for accurate delay measurements. The Ipanema system includes measurement engines 106 (called IP engine), which are localized at network accesses as illustrated in Figure 1. For each packet leaving an access network heading for another access network managed by an Ipanema measurement engine 106, the departure time is stored together with an identification tag calculated from the packet. Then, when a packet reaches the target access network, the same tag as the one calculated when the packet left the first access network is calculated and associated with the arrival time.

For a given pair of access networks, accumulate timing information for arriving packets is fed back from the access network where these packets have arrived to the measurement engine 106 through which they left for their destinations. With this feedback this measurement engine 106 can calculate quality metrics such as latency, jitter, packets loss, and throughout. These quality metrics are used to adapt shaping actions performed to prioritize certain data streams (e.g., Voice over IP).

The quality metrics calculated may also be reported up to a centralized measurements manager 104, denoted IP boss, which can interface other systems and perform advanced post-processing to generate data for network planning and such. In general terms, a measurement manager 104 is characterized by that it obtains measurement results from measurement engines 106 that are distributed in a network (typically in access networks) to performing end-to-end measurements.

### Standards for differentiation in IP networks

The forwarding quality may also be controlled by partitioning the forwarding resources in network nodes i.e., network traffic differentiation and admission control. The Integrated Services (IntServ) architecture offers this kind of controlled forwarding service described in R. Braden, D. Clark, and D. Shenker, "Integrated Services in the Internet Architecture: an Overview", IETF RFC 1633, July 1994. In this architecture, services offering predictable forwarding quality are defined and implemented in the network using queuing and scheduling further described in S. Shenker, C. Partridge, R. Guerin, "Specification of Guaranteed Quality of Service", IETF RFC 2212, September 1997 and J. Wroclawski, "Specification of the Controlled-Load Network Element Service", IETF RFC 2211, September 1997.

The Differentiated Services (DiffServ) architecture is another framework offering support for controlled forwarding quality in IP networks described in S. Blake, D. Black, M. Carlson, E. Davies, Z. Wang, W. Weiss, "An Architecture for Differentiated Service", IETF RFC 2475, December 1998. In contrast to the IntServ architecture, which provides a rather strict service control to the price of per-application data flow states in routers, the DiffServ architecture allows for a more scalable implementation. As with the IntServ architecture DiffServ routers need to implement differentiation using queuing and scheduling. In the DiffServ architecture rules for these implementations are referred to as Per-Hop Behaviours (PHBs) which is described in B. Davie, A. Charny, J.C.R. Bennet, K. Benson, J.Y. Le Boudec, W. Courtney, S. Davari, V. Firoiu, D. Stiliadis, "An Expedited Forwarding PHB (Per-Hop Behavior)", IETF RFC 3246, March 2002, J. Heinanen, F. Baker, W. Weiss, J. Wroclawski, "Assured Forwarding PHB Group", IETF RFC 2597, June 1999 and Nichols K., Blake S., Baker F., and Black D., Definition of the Differentiated Services Field (DS Field) in the IPv4 and IPv6 Headers, Internet RFC 2474 (Standards Track), December 1998, URL: http://www.ietf.org/rfc/rfc2474.txt**.**

### Requesting forwarding guarantees or assurances

In addition to the forwarding services defined in the IntServ architecture, a signaling protocol named the Resource Reservation Protocol (RSVP) described in Nichols K., Blake S., Baker F., and Black D., "Definition of the Differentiated Services Field (DS Field) in the IPv4 and IPv6 Headers", Internet RFC 2474 (Standards Track), December 1998, URL: http:/hwww.ietf.org/rfc/rfc2474.txt is used by applications to request these services. RSVP messages travel through the network and establish reservation states in each router at the path between end-points i.e., desktop computers, laptops, workstations, application servers, etc. given that the request can be admitted at these routers. This means that each router performs admission control for all their outgoing interfaces to protect from service violations.

In the DiffServ architecture, core routers i.e., routers that are not directly reached by end-points or by IP networks administrated by another network provider do not need to keep any per-flow states. Instead, edge routers i.e., routers through which end-points reach the network may perform advanced traffic conditioning including per-flow or per-aggregate traffic shaping, policing, and tagging. The tags are stored in the DiffServ field in the packet headers by edge routers and are used to give packets the intended forwarding quality through core routers.

Although the DiffServ architecture does not define any mechanism for admission control, such a mechanism can be applied in DiffServ networks to improve Forwarding quality predictability. E.g., RS VP can be used by restricting the processing of the protocol to edge routers only. However, a recommended approach for admission control in DiffServ networks is the concept of bandwidth brokers 102, which also is referred to as Network Resource Managers (NRMs), Resource Managers (RMs), and Network Resource Controllers (NRCs) by the community of people working in the area of computer communications.

An NRM functional entity 102 herein also referred to as resource manager typically resides in a separate node connected to the network as illustrated in figure 1. It is adapted to handle reservation requests between different IP networks, but it is also adapted to manage reservations within networks requested by end-points, or by session managers such as Session Initiated Protocol (SIP) servers. The latter task may be performed with high accuracy by an NRM 102 that keep track of the current network routing topology since admission control then can be made for each individual out-interface separately i.e., knowing the routing topology the exact path between end-points can be calculated. This enables an NRM 102 to support end-to-end quality guarantees or assurances.

The 1Q-Man™ product offered by the applicant, Operax AB, is arranged to perform admission control for each individual out-interface separately as well as admission control between different networks. It is thus a typical NRM. An instance of the IQ-Man™ product is arranged to learn about the networking routing topology within domains through topology probes 108 participating in the intra-domain routing protocol e.g., OSPF or IS-IS as shown in figure 1 and between domains though probes participating in Border Gateway Protocol (BGP) peering.

An NRM 102 that is able to perform per-out-interface admission control can keep track of booking levels over time as a result of committed resource requests. E.g., such information on booking levels is provided by Operax IQ-Man™.

The present invention improves the quality control by providing statistical assurances to traffic. Statistical guarantees implies that it is possible to prove, by performing an analysis, that there is a certain probability that one or more quality metrics are not exceeded, e.g. packet loss or delay. Such an analysis may be based on measurements providing parameters to said analysis and/or detailed knowledge about the traffic sources. Statistical assurances may in practise imply the same quality, but it is not possible to prove the probability.

### Admission control and forwarding properties

For asynchronous networks such as those based on the Internet Protocol (IP), high utilisation of forwarding capacity can be achieved though statistical multiplexing. Then, for services offering guarantees or assurances on forwarding quality, the amount of traffic at individual out-interfaces needs to be carefully controlled. The following sections discuss different properties of such forwarding services and the admission control needed to create them.

### Deterministic guarantees on the forwarding quality

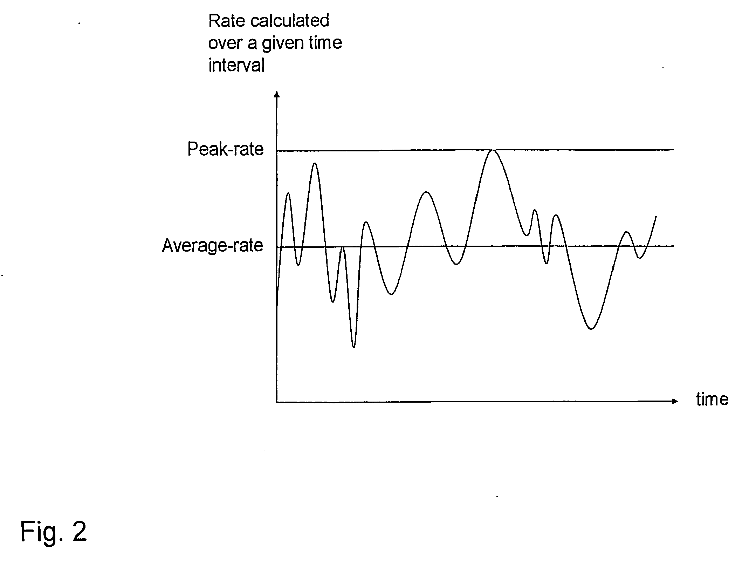

Knowing the peak-rates of application data flows, deterministic forwarding guarantees can be offered through admission control (i.e., sources makes an admission request through the network, or to an admission control server before sending any traffic). A peak-rate is the maximum rate at which an application data flow can send traffic in a given time interval as illustrated in Figure 2. The average-rate is often calculated over a long time interval, while peak-rate should be calculated over a much shorter time interval.

Unfortunately, offering deterministic guarantees results in low utilization of resources allocated for the forwarding service in question when application data flows have varying sending rates (e.g., video coders such as ITU-T H.263 produces varying amounts of data depending on movements in the encoded picture). For application data flows having varying sending rates, network utilization can be improved though statistical multiplexing. Several independent flows sharing a common resource are said to benefit from statistical multiplexing if the sum of their peak rates can exceed the total out- interface bandwidth without resulting in quality degradation. This is based on the assumption that the flows send at their peak-rates independently of each other and therefore distributed over time.

### Statistical guarantees on the forwarding quality

To improve network utilization through statistical multiplexing, the sum of peak-rates for application data flows sharing a common out-interface must exceed the forwarding capacity of that out interface, or the portion of the capacity of that out-interface allocated for these application data flows. Note, however, that the sum of the average rates of these application data flows must not exceed that capacity. Then, the out-interface will be overloaded and no forwarding guarantees can be offered.

In cases when the sum of peak-rates exceeds the (allocated) out-interface capacity, it is not possible to offer deterministic guarantees. It is however possible to offer statistical guarantees, e.g. that the loss-rate at such an out-interface does not exceed a pre-defined value. Statistical properties of each individual application data flow or the aggregate of all application data flows must then be known in order to calculate the risk of violating the statistical guarantee when accepting an additional application data flows for the out-interface in question.

Knowledge of statistical properties for application data flows can be identified beforehand. They may e.g. be given from the definition of the speech codec used, or they may be estimated through measurements. The statistical properties for traffic of e.g. IP telephony applications may be reasonably predictable and the risk of violating the statistical guarantee in question may thus be calculated without measuring these properties.

The statistical properties for some applications may however be very unpredictable. An example is video conference applications where the statistical properties of their traffic depend on movements of people participating in the conference. For such applications, it is preferable to measure these properties.

The information on statistical properties needs to be accurate for very short time-scales in order to be able to be used in the mathematical methods used to calculate the risk of violating given guarantees. This means that measurement-based admission control for statistically guaranteed services requires network nodes to perform operations with high time complexity i.e., processing intensive operations.

### Statistical assurances on the forwarding quality

Since node measurements require intensive processing operations in the nodes, it is often necessary to rely on statistical assurances which do not require node measurements.

### Probe-based admission control:

It is possible to achieve predictable forwarding quality while allowing for statistical multiplexing by using probing for admission control. Instead of making an admission request to the network, or to an admission control server, sources send probing traffic e.g. application data flows immediately to the network. The forwarding quality of this traffic must be monitored by the sources e.g., through the Real Time Control Protocol (RTCP) defined in Schulzrinne H., Casner S., Frederick R., and Jacobson V., RTP: A Transport Protocol for Real-Time Applications, Internet RFC 1889 (Standards Track), January 1996, URL: ftp://ftp.rfc-editor.org/in-notes/rfc1889.txt. Sources tag their probing traffic to be forwarded with lower priority than fully accepted traffic i.e., so that the forwarding quality decreases for probing traffic before fully accepted traffic notices any such degradation.

The source experiencing sufficient forwarding quality for their probing traffic tag their traffic as fully accepted after a pre-defined probe period. The other sources that not experience sufficient forwarding quality must however continue sending traffic tagged as neither fully accepted nor probing traffic. An example is IP networks, which can tag traffic as best-effort. Thereby, assurances on forwarding quality may be given to application data flows tagged as being fully accepted. No strict guarantees are however given.

The probe-based approach also suffers from the problem of that many sources may probe the network at once, which results in that none of these sources is admitted. The problem of several sources probing at the same time is in L. Breslau, E. Knightly, S. Shenker, I. Stoica, and H. Zhang, "Endpoint Admission Control: Architectural Issues and Performance," in Proceedings of ACM SIGCOMM 2000, Stockholm, Sweden, August 2000 referred to as trashing. In addition, when offering services providing assurances on very low loss-rates and delay, the probing period needs to be long enough to measure these quality metrics accurately. Unfortunately, long probing periods increases the risk of trashing.

### End-to-end measurement based admission control:

The forwarding quality may be controlled using end-to-end measurements in combination with network traffic differentiation and admission control. In particular, in C. Cetinkaya and E. Knightly, Egress Admission Control, in proceedings of IEEE INFOCOM 2000, Mar. 2000, an approach for admission control in differentiated networks that combines estimations of traffic and service characteristics through end-to-end measurements is disclosed.

With the approach defined by Knightly et al. traffic characteristics are estimated by observing packet inter-arrival periods and service characteristics are estimated by observing delay variations of packets traversing the network in question. The latter implies that the delay of each packet must be possible to determine accurately, which e.g. can be made by providing each packet with a timestamp, or by using an end-to-end measurement system mentioned above.

### Threshold or provisioning level based admission control:

Another approach to offer assurances on forwarding quality while allowing for statistical multiplexing is to make admission control decisions using a bit-rate threshold for each out-interface in a network. That is, a maximum sum of application data flow bit-rates for each such interface. This threshold is referred to as the provisioning level. Provisioning level based admission control can be made by NRMs, by routers processing RSVP messages, or by any other entity that performs per-out-interface admission control or per-network admission control i.e., a single provisioning level is used for an entire network instead of individual out-interfaces.

The sum of accepted bit-rates for application data flows plus the bit-rate of the request to be evaluated may be compared with the provisioning level of each out-interface in order to decide whether one or more of these levels is exceeded or not. An advantage with this approach is that it is possible to easily include support for advance reservations e.g., as implemented in the IQ-Man™ product offered by Operax.

The problem is however to chose these provisioning levels to allow for a correct number of application data flows to maintain target assurances on forwarding quality e.g., less than one percent packet loss measured over two minutes.

In a threshold-based admission control complemented with node measurements, the forwarding quality must be measured continuously in all routers being loaded with prioritized traffic. Although these measurements may be made with simple mechanisms available in legacy routers and only at routers carrying loads exceeding a pre-determined level, they burden these routers with additional processing and memory usage.

### Finding appropriate provisioning-levels

Assurances on forwarding quality can be offered through provisioning-level based admission control. However, to benefit from multiplexing gains, the admission control must allow for limited overbooking (i.e., the sum of all accepted application data flows' peak-rates must be allowed to exceed the allocated link capacities). The problem is how to select the appropriate level of overbooking for each link in a network. The level of overbooking is determined from the sum of all accespted data flows' peak-rates and the provisioning level used. Thus, the amount of overbooking can e.g. be adjusted by changing provisioning-levels. The provisioning-levels must support target quality assurances while allowing high degrees of statistical multiplexing.

The level of overbooking for a particular link is determined by a number of parameters; the link speed, its buffer capacity or acceptable delay, acceptable loss-rate, multiplexing properties of present application data flows, and the mix of application data flows with different multiplexing properties (i.e., the traffic mix). While link properties and parameters defining the target forwarding quality are known beforehand, multiplexing properties of different application data flows need to be estimated or measured to determine appropriate levels of overbooking.

US 2003/0091165 Al describes a network management system which injects voice traffic at end points of a network and measures the quality of service. The system takes the topology of the network into account and makes a root cause analysis to identify problematic devices.

### SUMMARY

An object of the present invention is to provide a network, method and a computer program product that controls the forwarding quality and improves the utilisation of the network.

A further object of the invention is to provide a method and a system for defining appropriate provisioning levels for the interfaces in the system such that the forwarding quality is improved and the utilisation of the network is improved.

This is achieved in a method according to claim 1, a node according to claim 9 and a computer program according to claims 17 and 18.

Hereby a method, a node and a computer program are provided where end-to-end measurements are used to detect quality violations and provisioning levels are defined for one or more interfaces at which the forwarding quality most likely were violated. Furthermore the provisioning levels are continually adjusted in order to limit the forwarding quality violations in the system.

A merit of the invention is that it allows for services assuring forwarding quality and high network utilization through statistical multiplexing without requiring processing intensive measurements in core network nodes. The invention is based on end-to-end measurement results, topology knowledge, and information on booking-levels. Using end-to-end measurements instead of measuring forwarding quality in individual networks nodes is beneficial since only nodes at the network edges need then to process measurements. Such nodes do not handle as high amounts of traffic as networks nodes forwarding traffic in the network core. Thus, edge nodes are likely to be less loaded than core nodes, which makes them better suited to perform processing intensive tasks.

Further embodiments of the present invention are set forth by the depending claims.

### BRIEF DESCRIPTION OF THE DRAWINGS

Figure 1 illustrates a data network schematically, where the present invention may be implemented.
Figure 2 is a diagram showing the peak-rate versus average rate.
Figure 3 illustrates paths and interfaces in a simple network.
Figure 4 is a flowchart of the method according to the invention.
Figure 5 is a flowchart of additional inventive steps.
Figure 6 is a schematic illustration of an NRM according to one embodiment of the invention.

### DETAILED DESCRIPTION OF THE EMBODIMENTS

A method and a computer program product according to the present invention may be implemented in a conventional data network comprising interconnected routers and servers.

An example of such a conventional network is a multi-technology network where an operator provides an IP/MPLS backbone and several access networks based on various switched link layer technologies e.g., including an access network based on ATM switching, another access network based on Ethernet switching and a third based on WLAN technologies. Moreover, the network may comprise interconnectable routers, servers and other network elements known by a man skilled in the art.

In this application, a data network is defined as a switched network forwarding data units between network interfaces of network nodes using identifiers associated with the target circuit being setup through the network e.g., as in Asynchronous Transfer Mode (ATM networks and in Multiprotocol Label Switching (MPLS) networks, or a datagram network forwarding data units between network interfaces of network nodes using global addresses enabling local next-hop decisions made by each node e.g., as in Internet Protocol (IP) networks. The data units may be of fixed size e.g., ATM cells or of variable size e.g., IP packets using their destination addresses for datagram forwarding or using MPLS tags for switching.

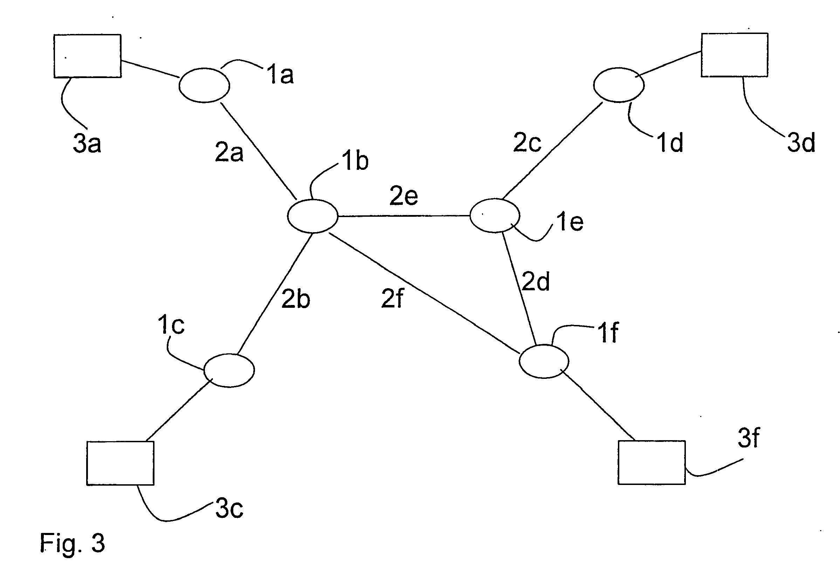

According to the invention a method is provided for defining new or adjusting already provided provisioning levels for interfaces when end-to-end measurements have shown that quality violations are present over paths involving these interfaces. The interface or interfaces that probably are the reason for the detected quality violation on the path involving these interfaces are identified. This identification is performed by combining different end-to-end measurements in the system, both measurements where a quality violation has been detected and other end-to-end measurements, with network topology awareness. By using topology awareness it is possible to identify one or more interfaces that possibly caused the detected quality violation, see further below where Figure 3 is described. To further improve the reliability of the identification knowledge about booking levels for the different interfaces is used. When one or more interfaces have been finally selected provisioning levels are defined for these interfaces in order to limit the quality violations in the measured path. Alternatively an already provided provisioning level is adjusted.

Furthermore, if it is detected that an already set provisioning level is reached without detected quality violations this provisioning level can be adjusted or removed. Another interface that probably caused the initially measured quality violation is identified and a provisioning level is provided for this interface instead.

The invention will be described in detail below.

For the invention, we require that a booking-level is associated with each link in a network. Such booking-level can e.g. be managed by a network node, or by an admission control server. It is further required that records on booking-levels are updated as new reservation requests are admitted and existing reservations are released. It is also required that the amount of forwarding resources allocated for the traffic that is to be controlled by the provisioning-level setting algorithm of the invention is known for each network interface that can be considered for having a provisioning-level defined by the algorithm.

Moreover, we assume that applications directly or indirectly define a bit-rate in their admission requests and that the meaning of these bit-rates is known (e.g., they are the peak-rate of each different application data flow). Defining bit-rates indirectly means that an application's identity can be detected by some mechanism and that the identity can be mapped to a bit-rate with known meaning.

We require that passive or active end-to-end measurements are made over one or more paths through the network. Passive measurements can be performed by dedicated nodes in access networks or by end-nodes such as desktop computers. When performed by end-nodes, the end-to-end measurements can be made by applications presenting data to users or by separate applications monitoring the quality of the data stream delivered to applications that present data to users.

The measurement results are processed locally by a node gathering these results, or distributed by several nodes of which each one have access to only a subset of these results (e.g., by the nodes performing the measurements). For the processing it is further required that information on the current routing topology can be obtained and that records on current booking-levels and amount of resources allocated are available.

With reference to Figure 3 it is described how different end-to-end measurements could be combined with knowledge about the network topology to identify one or more potentially overloaded interfaces. The network shown in Figure 3 is a small and simple network. Many networks are of course much more complex. The method according to the invention is however applicable also on more complex networks.

Six nodes 1a, 1b, 1c, 1d, 1e and 1f are shown in Figure 3. The network topology is known. Node 1a is connected to node 1b. The link there between is called 2a. Node 1c is also connected to node 1b and the link there between is called 2b. Node 1b is further connected to node I and the link there between is called 2e. Node 1b is also connected to node 1f and the link is called 2f. Node 1e is connected to node 1f and the link there between is called 2d and finally node 1e is connected to node 1d and the link there between is called 2c. The nodes 1a, 1c, 1d and 1f are edge nodes in the network and the nodes 1b and 1e are core nodes. A first Measurement engine 3 a is connected to the node 1a, a second measurements engine 3c is connected to node 1c, a third measurement engine 3d is connected to node 1d and a fourth measurement engine 3f is connected to node 1f. The four measurement engines 3a, 3c, 3d and 3f perform end-to-end measurements of the paths between the four edge nodes 1a, 1c, 1d and 1f. The links 2a through 2f are all bi-directional. Each node has two interfaces to each of its attached links (i.e. one out-interface and one in-interface). Any quality violation detected is assumed to occur at an interface.

In an example scenario quality violations are detected for the path starting from the third measurements engine 3d and ending in the fourth measurement engine 3f. No other quality violations are detected in the network. By using the knowledge about the network topology it can be determined that the out-interface of node 1e for link 2d is potentially overloaded. All other interfaces are parts of the paths between the other edge nodes and since no other quality violations have been detected the out-interface of node I e for link 2d is the only possible overloaded interface. This was a simple example. In reality there will sometimes be more than one potentially overloaded interface. Then information of the booking levels for the different interfaces is used to identify which one or ones of the potentially overloaded interfaces that are the most likely overloaded one or ones. One or more interfaces are hereby selected as potentially overloaded.

These selected interfaces are provided with a provisioning level in order to limit the usage of these interfaces and thereby the overload of the path at which the quality violation was detected.

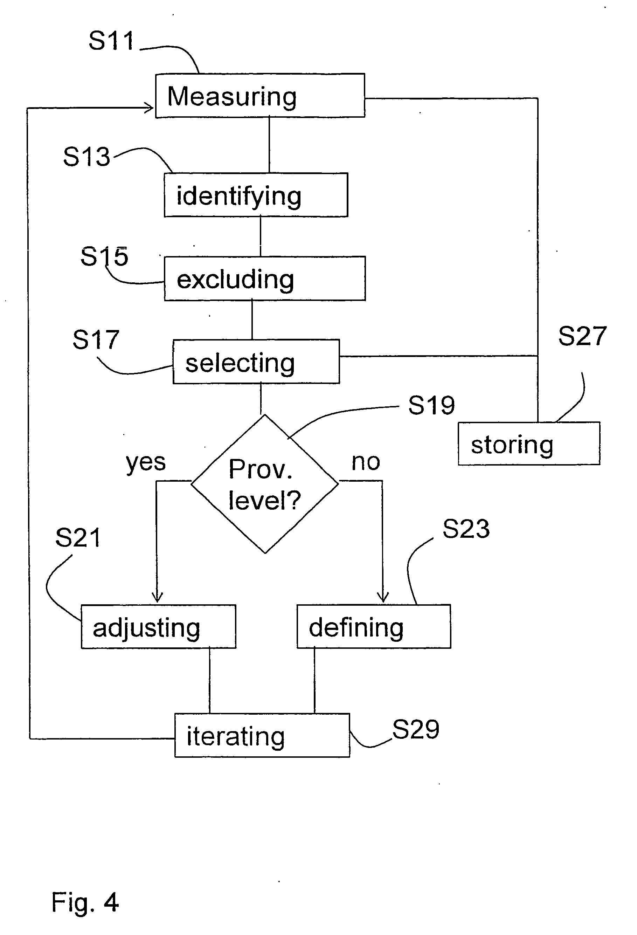

The process for identifying potentially overloaded interfaces and then provide them with provisioning levels is described below with reference to the flow chart in Figure 4.
S11: Measuring forwarding quality between end points in a network, i.e. end-to-end measurements.
S13: Identifying potentially overloaded interfaces comprised in a path where quality violations have been detected by the end-to-end measurements. These interfaces are identified using awareness of the network topology.
S 15: Excluding some of the identified interfaces as not overloaded by using other end-to-end measurements performed in the network and awareness of the network topology. For example interfaces comprised in paths where no quality violations have been detected are excluded, see detailed description above.
S17: Selecting for which of the remaining potentially overloaded interfaces provisioning levels should be provided or if a provisioning level already has been provided for the selected interface this provisioning level should instead be adjusted. The selection is based on information about current booking levels and forwarding capacity for the interfaces. It could also be based on history of booking levels for the interfaces.
S19: Is there already a provisioning level for this interface(s)?
S21: If yes, the existing provisioning level is adjusted such that the usage of the measured overloaded path is limited at this interface(s).
S23: If no, a provisioning level is defined for this interface such that the usage of the measured overloaded path is limited at this interface(s).

The provisioning level is for example set equal to the present booking level for the selected interface. Hereby quality violations are prevented from being worse. Alternatively the provisioning level is set lower than the booking level for the selected interface at the time for the detected quality violation in order to reduce the quality violation. It could for example be a certain predefined percentage below the booking level. If the provisioning level is set to be lower than the present booking level for the interface there are two possibilities to attain a booking level below or equal to the provisioning level. The first is to stop all new entries and wait until some of the reservations have been released and the other is to pre-empt reservations.

In one embodiment of the invention the approaches to achieve less quality violations and the approach to prevent quality violations from getting worse can be combined by defining several limits for each quality metric allowing for up to three levels of quality violation. Then, the appropriate approach can be used for each level of quality violation detected. E.g., for the first level the approach to prevent quality violations from getting worse, for the second level the approach allowing for less quality violations after some of the reservations at overloaded paths have been released, and for the third level the approach to reduce the detected quality violations by pre-empting reservations.
S27: At each event of reported quality violation for one or more paths, information on the potentially overloaded interfaces for each one of these paths is stored for future use (i.e., both those interfaces that were selected as probably overloaded and those interfaces that were excluded as less likely overloaded). Also, from the information stored it must be possible to know which paths that faced quality violations simultaneously (e.g., by associating the information with timestamps for the beginning and the end of the quality violations that were detected).
S29: Iterating the process in order to achieve better and better provisioning levels for the interfaces.

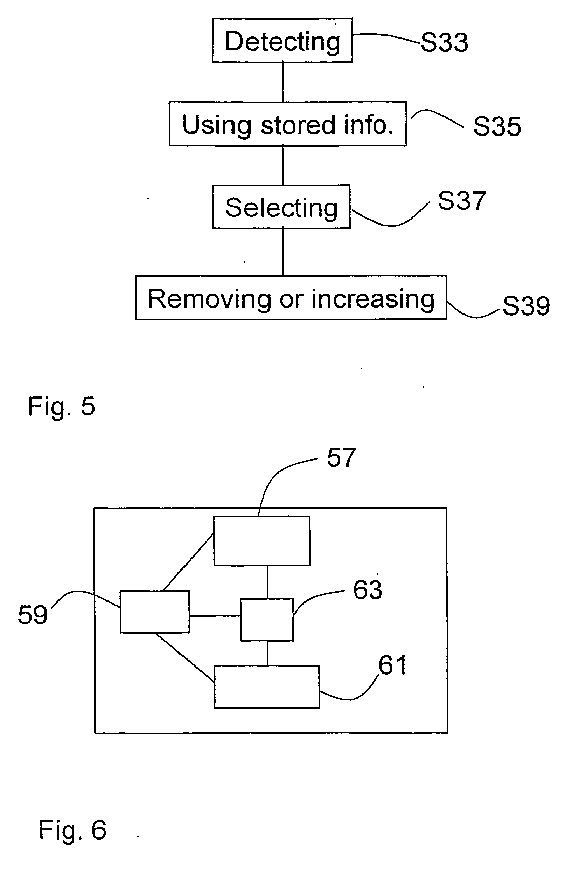

Parallel with the above described flow another flow is also provided according to the invention. This flow is illustrated in Figure 5.
S33: Detecting that an already set provisioning level for an interface is reached without any quality violations being detected by the end-to-end measurements. Hereby it is obvious that either was this provisioning level provided for wrong interface, i.e. wrong interface was selected as potentially overloaded according to the process described in relation to Figure 4, or the provisioning level was set too low.
S35: Using the stored information (S27) about previous end-to-end measurements to identify which other interface/s that probably caused the detected quality violation when the provisioning level that was detected as wrongly set in S33 was defined.
S37: Selecting one or more of these interfaces as most probably causing the quality violation by using booking levels as described above. This step is equal to step S 17.
S39: Removing or increasing the provisioning level detected in S35 and defining new provisioning levels for the selected interfaces in S37. The levels of these new provisioning levels could be selected as described above.

For paths at which no other potentially overloaded interfaces were identified at the event of quality violation, S 13, the provisioning-level reached by the booking-level is instead increased carefully (e.g., increased with a small fraction of its current value).

The method steps described with reference to Figure 4 and 5 are hereafter called the provisioning level setting algorithm. The steps S 17 and S37 to select one or more interfaces of the identified interfaces for which a provisioning level should be defined or adjusted is a separate algorithm hereafter called the interface selection algorithm. There are different possibilities to perform this interface selection. In one embodiment of the invention the booking levels of the identified interfaces are simply compared and one or more interfaces having the highest booking levels are selected.

The interface selection algorithm may also identify the most likely overloaded interfaces from the set of potentially overloaded ones using information on the current booking-level and amount of forwarding resources allocated for the traffic being measured. The interface-selection algorithm may also use additional information such as a history of maximum booking-levels without quality violations for the different interfaces to identify the most likely overloaded interfaces.

Selecting interfaces for which to define or adjust provisioning-levels can as mentioned in the previous section be an iterative process that approaches the best setting of provisioning-levels gradually. This means that the interface-selection algorithm must use any new information being available between iterations to improve the setting.

The specific interface-selection algorithm defined below is a more detailed example of how additional information gained between iterations of the provisioning-level setting algorithm can be used by an interface-selection algorithm.

For the specific interface-selection algorithm defined here it is required that maximum registered booking-levels without quality violations are stored (i.e., the maximum booking-level for an interface is stored if no paths spanning that interface experiences any quality violation during the period for when that booking-level is valid).

The interface-selection algorithm finds one or more interfaces (from a set of potentially overloaded interfaces) for which provisioning-levels are defined or adjusted. The set of potentially overloaded interfaces are found by combining information on paths experiencing quality violations with topology awareness as described above.

Each interface in a set of potentially overloaded interfaces can be graded based on the relation between booking-level for the interface and the forwarding resources (e.g., forwarding and buffer capacity) allocated for the traffic in question at the interface. Also, the grading can be based on the maximum booking-level without quality violation detected. The interfaces with the highest grades are preferred candidates for having provisioning-levels defined or adjusted.

Grades are distributed based on the level of over-booking (i.e., the relation between booking-level and the forwarding resources). High levels of over-booking give high grades while lower levels of over-booking give lower grades. Thereafter, grades can be reduced for one or more interfaces if their maximum booking-levels have been higher than their current booking-levels.

Grades are reduced with factors determined by the relation between the maximum booking-levels and the current booking-levels (i.e., higher difference gives a factors reducing the grades more than factors given by lower differences). Also, the time at which a maximum booking-level is registered affects this factor (e.g., recently registered maximum booking-levels give factors reducing the grades more than factors given by earlier registered maximum booking-levels).

Note that grades can be changed also when established provisioning-levels are reconsidered (i.e., the second event in the general algorithm illustrated in Figure 5). This is because maximum booking-levels for one of more interfaces not having provisioning-levels defined may have been raised between consecutive events of quality violations involving those interfaces. i.e. the booking-level for an interface has been higher without quality violation than it was when a quality violation previously was detected for a path involving this interface.

Moreover, say that a provisioning-level was defined for an interface at some point and that another potentially overloaded interface was not selected for having a provisioning-level defined at that time. This second interface becomes however selected at a following event of quality violation for a path not involving the first interface and that the provisioning-level defined for the second interface is lower than what it would have been if it was selected at the first event.

Assume further that the provisioning-level defined for the first interface is reached without any quality violation being detected for paths spanning that interface (i.e., the second type of event defined by the general algorithm). Then, the provisioning-level for that interface should be released without any new provisioning-level being defined (i.e., it is effectively replaced by the provisioning-level already defined for the second interface).

Hence, when a provisioning-level for an interface is reconsidered and one or more potentially overloaded interfaces identified as alternatives to that interface have provisioning-levels defined at an intermediate event of quality violation, these intermediately defined levels may cancel the selection of other interfaces. To cancel the selection of other interfaces it is however required that they protect the path for which the reconsidered provisioning-level was defined to protect.

Another example of an interface-selection algorithm is one that aims at selecting the minimum number of interfaces for which provisioning-levels can protect the path or paths for which overload is detected. This minimum number of interfaces can be selected from a set of potentially overloaded interfaces for which the levels of overbooking exceeds a pre-defined threshold. An interface-selection algorithm could also select interfaces for which to provide provisioning-levels based on random numbers alone or in combination with e.g. the grades described above. As for the first example, these interfaces can be selected from a set of interfaces for which the levels of overbooking exceeds a common and pre-defined threshold.

In Figure 6 a Network Resource Manager, NRM, functional entity according to the invention is shown. This entity could be comprised in a node in the network. In Figure 1 the NRM has reference number 102. If a user of the network wants to communicate with another user and needs an assurance on the forwarding quality the user makes a reservation request to the NRM. The NRM keeps track of the network topology (i.e. how the network nodes are interconnected and the capacity of the interfaces to links connecting these nodes) and the booking-levels of the interfaces. Furthermore the NRM is according to the invention adapted to provide provisioning levels for the interfaces in the network. These provisioning levels are used such that booking levels always are compared with the corresponding provisioning levels for these interfaces and new reservation requests are only admitted if they do not increase the booking levels above their corresponding provisioning levels.

The inventive method defines a method for setting provisioning levels and adjust them such that they protect against violations of predefined quality levels while optimizing the network utilization.

The inventive steps are here shown to be performed in one node. However the different functions could also be separated to different nodes. The method according to the invention is further implemented by means of a computer program product comprising the software code means for performing the steps of the method. The computer program product is run in a node in the network, such as a router, a computer dedicated to run the NRM functions or a Radio Network Controller in a radio access network. The computer program is loaded directly or from a computer usable medium, such as a floppy disc, a CD, the Internet etc.

In Figure 6 an NRM functional entity comprising means for performing the inventive steps is shown. However the NRM functional entity also comprises means for keeping track of booking levels in the interfaces, means for providing provisioning levels for the interfaces, means for comparing booking levels with corresponding provisioning levels and means for admitting or not admitting reservation requests from users. Furthermore, according to the invention the NRM functional entity comprises a receiving means 57 which is adapted to receive information from measurement engines in the network performing end-to-end measurements. In Figure 1 the measurement engines have reference number 106. The measurement engines measure forwarding quality over paths between the different measurement engines. The receiving means 57 is further adapted to receive information about the network topology. This could be received from topology probes (108, Fig. 1) as described in the background chapter. Alternatively the topology information could be obtained from a management database or otherwise it could be configured directly into the NRM.

The NRM functional entity comprises further a selecting means 59 connected to the receiving means 57 which is adapted to first combine the received information of end-to-end measurements and topology as described above in relation to Figure 4. The selecting means 59 is then adapted to select which one of the interfaces from the group of identified interfaces that should be provided with a provisioning level (alternatively adjusting already provided provisioning level) by using the received information about booking levels. Hereby the steps S 13, S 15 and S 17 of the flow described with reference to Figure 4 are all performed in the selecting means 59. In the claims the identifying; excluding and selecting are all referred to as a selecting.

Furthermore the NRM functional entity comprises a provisioning level defining or adjusting means 61 which is connected to the selecting means 59. The selected interfaces are here given a provisioning level according to what was described in relation to Figure 4. The provisioning level defining or adjusting means 61 is preferably also connected to a storing means 63 in the NRM. The storing means 63 is adapted to store information about for example previous end-to-end measurements where quality violations have been detected and maximum booking levels for all the different interfaces as was described above. The provisioning level defining or adjusting means 61 can use information stored in the storing means 63 to decide on which level the provisioning levels should be set. The storing means 63 is further connected to the selecting means 59 such that the selecting means 59 as described above can use old information about booking levels and end-to-end measurements for the selections. Furthermore both the interfaces that are selected and the interfaces that are not selected by the selecting means 59 should be stored in the storing means 63 together with timestamps as was described in step S27.

The receiving means 57 is further adapted to receive information from the booking level monitoring function in the NRM when a set provisioning level has been reached without a quality violation detected for paths involving this interface. The selecting means 59 is then adapted to select one or more other interfaces that should be provided with provisioning levels instead for the previously selected interface that apparently was wrongly selected. As also described above, if no other interfaces could be identified the provisioning level should be carefully increased.

The main merit of the invention presented herein is that it allow for services assuring forwarding quality and high network utilization through statistical multiplexing without requiring processing intensive measurements in core network nodes. The invention is based on end-to-end measurement results, topology knowledge, and information on booking-levels.

Using end-to-end measurements instead of measuring forwarding quality in individual networks nodes is beneficial since only nodes at the network edges need then to process measurements. Such nodes do not handle as high amounts of traffic as networks nodes forwarding traffic in the network core. Thus, edge nodes are likely to be less loaded than core nodes, which makes them better suited to perform processing intensive tasks.

Another benefit of using end-to-end measurements instead of measurements in individual nodes is that measurements results are easier to collect for processing by a provisioning-levels setting algorithm (i.e., instead of collecting measurement results from potentially all individual nodes in a network, measurement results need only be collected from edge nodes when end-to-end measurements are used).

The present invention is not limited to the above-described preferred embodiments. Various alternatives, modifications and equivalents may be used. Therefore, the above embodiments should not be taken as limiting the scope of the invention, which is defined by the appending claims.

## Claims

1. A method for controlling the forwarding quality in a data network comprising measuring (S11) end-to-end forwarding quality in measurement nodes (106) located outside the network core and detecting forwarding quality violations in at least one path between these nodes, comprising:
- selecting (S13, S15, S17) at least one potentially overloaded interface comprised in the at least one path where quality violations were detected by combining knowledge about different end-to-end measurements performed in the network, with knowledge about the network topology by determining which interfaces are traversed over each individual path, and knowledge about booking levels and forwarding capacity for the interfaces;
**characterized in that** the method further comprises:
- defining (S23) a new or adjusting (S21) an already existing provisioning level for each selected interface, said provisioning level defining a maximum admitted sum of forwarding resources requested directly or indirectly by applications for their application data flows, ADFs, for the interface/s, such that the usage of each path detected to have forwarding quality violations is limited at one or more interfaces.

2. The method according to claim 1, **characterised by** iterating (S29) the process to improve the settings of the provisioning levels in the system.

3. The method according to claim 1 or 2, **characterised by** storing (S27) information about previous end-to-end measurements and previous booking levels for the interfaces.

4. The method according to one of claims 1 to 3, **characterised by** using history of previous booking levels possibly together with any associated quality violations, forwarding capacities and/or provisioning levels for the interfaces for the selection of at least one potentially overloaded interface.

5. The method according to claim 4, **characterised by** detecting (S33) that a previously set provisioning level for an interface is reached without any measured quality violation on paths involving this interface and by using (S35) the stored information of previous end-to-end measurements and previous booking levels selecting (S37) at least one other interface that probably caused the quality violation measured when the previously set provisioning level was set and remove (S39) or increase the provisioning level for the previously selected interface and instead provide a provisioning level to each new selected interface or if no other potentially overloaded interfaces exist, increase (S39) the limiting provisioning level.

6. The method according to one of claims 1 to 5, **characterised in that** the defining (S23) of a new or the adjusting (S21) of an already existing provisioning level for the at least one selected interface is performed by setting the provisioning level equal to the booking-level for the interface at the time for the detected quality violation.

7. The method according to one of the claims 1 to 5, **characterised in that** the defining (S23) of a new or the adjusting (S21) of an already existing provisioning level for the at least one selected interface is performed by setting the provisioning level lower than the booking-level in the interface at the time for the detected quality violation and either pre-empting some reservations to reach the provisioning level or waiting for some reservations to be released to reach the provisioning level.

8. The method according to claim 6 or 7, **characterised in that** the provisioning level is set either equal to or lower than the booking-level of the interface at the time for the detected quality violation, depending on which level of quality violation was measured.

9. A node in a data network, said node being adapted to control the forwarding quality in the network and comprises receiving means (57) adapted to receive information of end-to-end measurements of forwarding quality performed in the network, wherein the receiving means (57) further is adapted to receive information of the network topology and information of booking levels and forwarding capacity for interfaces in the network and wherein it further comprises:
- selecting means (59) connected to the receiving means (57) and adapted to combine information from the end-to-end measurements with the topology information and the information of booking levels to select at least one potentially overloaded interface comprised in at least one path where quality violations have been detected by end-to-end measurements;
**characterized in that** the receiving means (57) further comprises:
- provisioning level defining and adjusting means (61) connected to the selecting means (59) and adapted to define a new or adjust an already existing provisioning level for the at least one selected interface, said provisioning level defining a maximum admitted sum of forwarding resources requested directly or indirectly by applications for their application data flows, ADFs, for the interface/s, such that the usage of each path detected to have forwarding quality violations is limited at one or more interfaces.

10. The node according to claim 9, **characterised in that** it is adapted to iterate the process of defining and adjusting provisioning levels to improve the settings of the provisioning levels in the system.

11. The node according to claim 9 or 10, **characterised in that** it comprises storing means (63) connected to the receiving means (57) and to the selecting means (59), said storing means (63) being adapted to store information about previous end-to-end measurements and previous booking levels for the interfaces.

12. The node according to claim 11, **characterised in that** the selecting means (59) is adapted to retrieve information from the storing means (63) in order to use history of previous booking levels possibly together with any associated quality violations, forwarding capacities and/or provisioning levels for the interfaces for the selection of at least one potentially overloaded interface.

13. The node according to claim 11 or 12, **characterised in that** the receiving means (57) further is adapted to receive information that a previously set provisioning level in an interface is reached without any measured quality violation on paths involving this interface and **in that** the selecting means (59) is adapted to by using the stored information of previous end-to-end measurements and previous booking levels select at least one other interface that probably caused the quality violation measured when the previously set provisioning level was set and the defining and adjusting means (61) is adapted to remove or increase the provisioning level for the previously selected interface and instead provide a provisioning level to each new selected interface or if no other potentially overloaded interfaces exist, increase the limiting provisioning level.

14. The node according to one of the claims 9 to 13, **characterised in that** the defining and adjusting means (61) is adapted to set the provisioning level equal to the booking-level for the interface at the time for the detected quality violation.

15. The node according to one of the claims 9 to 13, **characterised in that** the defining and adjusting means (61) is adapted to set the provisioning level lower than the booking-level for the interface at the time for the detected quality violation and either pre-empting some reservations to reach the provisioning level or waiting for some reservations to be released to reach the provisioning level.

16. The node according to claim 14 or 15, **characterised in that** the defining and adjusting means (61) is adapted to choose one of the described provisioning level setting methods depending on which level of quality violation was measured.

17. A computer program product directly loadable into the internal memory of a processing means within one or more nodes in a data network, comprising the software code means for performing the steps of any of the claims 1-8.

18. A computer program product stored on a computer usable medium, comprising readable program for causing a processing means in one or more nodes in a data network, to control an execution of the steps of any of the claims 1-8.

## Patentansprüche

1. Verfahren zum Steuern der Weiterleitungsgüte in einem Datennetzwerk, umfassend das Messen (S11) einer Ende-bis-Ende-Weiterleitungsgüte in Messknoten (106), die sich außerhalb des Netzwerkkerns befinden, und das Erfassen von Weiterleitungsgüteverletzungen in mindestens einem Pfad zwischen diesen Knoten, Folgendes umfassend:
- Auswählen (S13, S15, S17) mindestens einer potentiell überlasteten Schnittstelle, die in dem mindestens einen Pfad, in dem Güteverletzungen erfasst wurden, enthalten ist, indem Kenntnisse über andere im Netzwerk durchgeführte Ende-bis-Ende-Messungen mit Kenntnissen über die Netzwerktopologie durch Bestimmen, welche Schnittstellen über jeden einzelnen Pfad durchlaufen werden, und Kenntnissen über Reservierungsgrade und die Weiterleitungskapazität für die Schnittstellen kombiniert werden;
**dadurch gekennzeichnet, dass** das Verfahren darüber hinaus umfasst:
Definieren (S23) eines neuen oder Einstellen (S21) eines bereits bestehenden Bereitstellungsgrads für jede ausgewählte Schnittstelle, wobei der Bereitstellungsgrad eine maximal zulässige Summe von Weiterleitungsressourcen, die direkt oder indirekt durch Anwendungen für ihre Anwendungsdatenströme, ADFs, angefordert werden, für die Schnittstelle/n so definiert, dass die Nutzung jedes Pfads, bei dem erfasst wurde, dass Weiterleitungsgüteverletzungen vorliegen, auf eine oder mehrere Schnittstelle/n beschränkt wird.

2. Verfahren nach Anspruch 1, **gekennzeichnet durch** wiederholtes Durchführen (S29) des Prozesses, um die Einstellungen der Bereitstellungsgrade im System zu verbessern.

3. Verfahren nach Anspruch 1 oder 2, **gekennzeichnet durch** Speichern (S27) von Informationen über frühere Ende-bis-Ende-Messungen und frühere Reservierungsgrade für die Schnittstellen.

4. Verfahren nach einem der Ansprüche 1 bis 3, **gekennzeichnet durch** Verwenden des chronologischen Verlaufs früherer Reservierungsgrade gegebenenfalls zusammen mit jeglichen damit zusammenhängenden Güteverletzungen, Weiterleitungskapazitäten und/oder Bereitstellungsgraden für die Schnittstellen für die Auswahl mindestens einer potentiell überlasteten Schnittstelle.

5. Verfahren nach Anspruch 4, **gekennzeichnet durch** Erfassen (S33), ob ein zuvor für eine Schnittstelle eingestellter Bereitstellungsgrad ohne irgendeine gemessene Güteverletzung in Pfaden, die diese Schnittstelle enthalten, erreicht wird, und **durch** Verwenden (S35) der gespeicherten Informationen früherer Ende-bis-Ende-Messungen und früherer Reservierungsgrade, Auswählen (S37) mindestens einer Schnittstelle, die möglicherweise die gemessene Güteverletzung verursachte, als der zuvor eingestellte Bereitstellungsgrad eingestellt war, und Entfernen (S39) oder Erhöhen des Bereitstellungsgrads für die zuvor ausgewählte Schnittstelle, und statt dessen Vorsehen eines Bereitstellungsgrads für jede neue ausgewählte Schnittstelle, oder, falls es keine anderen potentiell überlasteten Schnittstellen gibt, Erhöhen (S39) des begrenzenden Bereitstellungsgrads.

6. Verfahren nach einem der Ansprüche 1 bis 5, **dadurch gekennzeichnet, dass** das Definieren (S23) eines neuen oder das Einstellen (S21) eines bereits bestehenden Bereitstellungsgrads für die mindestens eine ausgewählte Schnittstelle erfolgt, indem der Bereitstellungsgrad gleich dem Reservierungsgrad für die Schnittstelle in der Zeit für die erfasste Güteverletzung eingestellt wird.

7. Verfahren nach einem der Ansprüche 1 bis 5, **dadurch gekennzeichnet, dass** das Definieren (S23) eines neuen oder das Einstellen (S21) eines bereits bestehenden Bereitstellungsgrads für die mindestens eine ausgewählte Schnittstelle erfolgt, indem der Bereitstellungsgrad niedriger als der Reservierungsgrad in der Schnittstelle in der Zeit für die erfasste Güteverletzung eingestellt wird, und entweder einige Reservierungen vorweggenommen werden, um den Bereitstellungsgrad zu erreichen, oder auf einige freizugebende Reservierungen gewartet wird, um den Bereitstellungsgrad zu erreichen.

8. Verfahren nach Anspruch 6 oder 7, **dadurch gekennzeichnet, dass** der Bereitstellungsgrad entweder gleich dem oder niedriger als der Reservierungsgrad der Schnittstelle in der Zeit für die erfasste Güteverletzung in Abhängigkeit davon eingestellt wird, welcher Grad an Güteverletzung gemessen wurde.

9. Knoten in einem Datennetzwerk, wobei der Knoten dazu eingerichtet ist, die Weiterleitungsgüte im Netzwerk zu steuern, und eine Empfangseinrichtung (57) umfasst, die dazu eingerichtet ist, Informationen über im Netzwerk durchgeführte Ende-bis-Ende-Messungen der Weiterleitungsgüte zu empfangen, wobei die Empfangseinrichtung (57) darüber hinaus dazu eingerichtet ist, Informationen über die Netzwerktopologie und Informationen über Reservierungsgrade und eine Weiterleitungskapazität für Schnittstellen in dem Netzwerk zu empfangen, und wobei er darüber hinaus umfasst:
- eine Auswahleinrichtung (59), die an die Empfangseinrichtung (57) angeschlossen und dazu eingerichtet ist, Informationn aus den Ende-bis-Ende-Messungen mit den Topologieinformationen und den Informationen über Reservierungsgrade zu kombinieren, um mindestens eine potentiell überlastete Schnittstelle auszuwählen, die in dem mindestens einen Pfad enthalten ist, in dem Güteverletzungen durch Ende-bis-Ende-Messungen erfasst wurden;
dadurch gekennzeichet, dass die Empfangseinrichtung (57) darüber hinaus umfasst:
eine Einrichtung (61) zum Definieren und Anpassen des Bereitstellungsgrades, die an die Auswahleinrichtung (59) angeschlossen ist dazu eingerichtet ist, für die mindestens eine ausgewählte Schnittstelle einen neuen Bereitstellungsgrad zu definieren oder einen bereits bestehenden Bereitstellungsgrad anzupassen, wobei der Bereitstellungsgrad eine maximal zulässige Summe von Weiterleitungsressourcen, die direkt oder indirekt durch Anwendungen für ihre Anwendungsdatenströme, ADFs, angefordert werden, für die Schnittstelle/n so definiert, dass die Nutzung jedes Pfads, bei dem erfasst wurde, dass Weiterleitungsgüteverletzungen vorliegen, auf eine oder mehrere Schnittstelle/n beschränkt wird.

10. Knoten nach Anspruch 9, **dadurch gekennzeichnet, dass** er dazu eingerichtet ist, den Prozess des Definierens und Anpassens von Bereitstellungsgraden wiederholt durchzuführen, um die Einstellungen der Bereitstellungsgrade in dem System zu verbessern.

11. Knoten nach Anspruch 9 oder 10, **dadurch gekennzeichnet, dass** er eine Speichereinrichtung (63) umfasst, die an die Empfangseinrichtung (57) und die Auswahleinrichtung (59) angeschlossen ist, wobei die Speichereinrichtung (63) dazu eingerichtet ist, Informationen über frühere Ende-bis-Ende-Messungen und frühere Reservierungsgrade für die Schnittstellen zu speichern.

12. Knoten nach Anspruch 11, **dadurch gekennzeichnet, dass** die Auswahleinrichtung (59) dazu eingerichtet ist, Informationen aus der Speichereinrichtung (63) abzurufen, um den chronologischen Verlauf früherer Reservierungsgrade gegebenenfalls zusammen mit jeglichen damit zusammenhängenden Güteverletzungen, Weiterleitungskapazitäten und/oder Bereitstellungsgraden für die Schnittstellen, für die Auswahl mindestens einer potentiell überlasteten Schnittstelle zu verwenden.

13. Knoten nach Anspruch 11 oder 12, **dadurch gekennzeichnet, dass** die Empfangseinrichtung (57) darüber hinaus dazu eingerichtet ist, Informationen zu empfangen, ob ein zuvor eingestellter Bereitstellungsgrad in einer Schnittstelle ohne irgendeine gemessene Güteverletzung in Pfaden, die diese Schnittstelle enthalten, erreicht ist, und dass die Auswahleinrichtung (59) dazu eingerichtet ist, unter Verwendung der gespeicherten Informationen früherer Ende-bis-Ende-Messungen und früherer Reservierungsgrade mindestens eine andere Schnittstelle auszuwählen, die möglicherweise die gemessene Güteverletzung verursachte, als der zuvor eingestellte Bereitstellungsgrad eingestellt war, und dass die Einrichtung (61) zum Definieren und Anpassen (61) dazu eingerichtet ist, den Bereitstellungsgrad für die zuvor ausgewählte Schnittsstelle zu entfernen oder zu erhöhen und statt dessen einen Bereitstellungsgrad für jede neue ausgewählte Schnittstelle vorzusehen oder, falls es keine anderen potentiell überlasteten Schnittstellen gibt, den begrenzenden Bereitstellungsgrad zu erhöhen.

14. Knoten nach einem der Ansprüche 9 bis 13, **dadurch gekennzeichnet, dass** die Einrichtung (61) zum Definieren und Anpassen dazu eingerichtet ist, den Bereitstellungsgrad gleich dem Reservierungsgrad für die Schnittstelle in der Zeit für die erfasste Güteverletzung einzustellen.

15. Knoten nach einem der Ansprüche 9 bis 13, **dadurch gekennzeichnet, dass** die Einrichtung (61) zum Definieren und Anpassen dazu eingerichtet ist, den Bereitstellungsgrad niedriger als den Reservierungsgrad in der Schnittstelle in der Zeit für die erfasste Güteverletzung einzustellen und entweder einige Reservierungen vorwegzunehmen, um den Bereitstellungsgrad zu erreichen, oder auf einige freizugebende Reservierungen zu warten, um den Bereitstellungsgrad zu erreichen.

16. Knoten nach Anspruch 14 oder 15, **dadurch gekennzeichnet, dass** die Einrichtung (61) zum Definieren und Anpassen dazu eingerichtet ist, eines der beschriebenen Verfahren zum Einstellen des Bereitstellungsgrades in Abhängigkeit davon zu wählen, welcher Grad an Güteverletzung gemessen wurde.

17. Computerprogrammprodukt, das direkt in den internen Speicher einer Verarbeitungseinrichtung in einem oder mehreren Knoten in einem Datennetzwerk geladen werden kann, eine Softwarecodeeinrichtung zum Durchführen der Schritte nach einem der Ansprüche 1 - 8 umfassend.

18. Computerprogrammprodukt, das auf einem computernutzbaren Träger gespeichert ist, ein lesbares Programm umfassend, um eine Verarbeitungseinrichtung in einem oder mehreren Knoten in einem Datennetzwerk eine Ausführung der Schritte nach einem der Ansprüche 1 - 8 steuern zu lassen.

## Revendications

1. Procédé de commande de la qualité de transmission dans un réseau de données comprenant la mesure (S11) d'une qualité de transmission de bout en bout dans des noeuds de mesure (106) situés en dehors du coeur de réseau et la détection d'enfreintes à la qualité de transmission dans au moins un chemin entre ces noeuds, comprenant :
- la sélection (S13, S15, S17) d'au moins une interface potentiellement surchargée comprise dans l'au moins un chemin où des enfreintes à la qualité ont été détectées en combinant des connaissances sur différentes mesures de bout en bout réalisées dans le réseau avec des connaissances sur la topologie du réseau en déterminant quelles interfaces sont traversées sur chaque chemin individuel, et des connaissances sur des niveaux d'enregistrement et une capacité de transmission pour les interfaces ;
**caractérisé en ce que** le procédé comprend en outre :
- la définition (S23) d'un nouveau niveau de dimensionnement ou le réglage (S21) d'un niveau de dimensionnement déjà existant pour chaque interface sélectionnée, ledit niveau de dimensionnement définissant une somme maximale admise de ressources de transmission demandées directement ou indirectement par des applications pour leurs flux de données d'application (ADF) pour la / les interface/s, de sorte que l'emploi de chaque chemin détecté comme présentant des enfreintes à la qualité de transmission soit limité sur une ou plusieurs interfaces.

2. Le procédé selon la revendication 1, **caractérisé par** l'itération (S29) du processus pour améliorer les réglages des niveaux de dimensionnement dans le système.

3. Le procédé selon la revendication 1 ou 2, **caractérisé par** le stockage (S27) d'informations sur de précédentes mesures de bout en bout et de précédents niveaux d'enregistrement pour les interfaces.

4. Le procédé selon l'une des revendications 1 à 3, **caractérisé par** l'utilisation d'un historique de précédents niveaux d'enregistrement avec éventuellement toutes enfreintes à la qualité, capacités de transmission et/ou niveaux de dimensionnement associés pour les interfaces pour la sélection d'au moins une interface potentiellement surchargée.

5. Le procédé selon la revendication 4, **caractérisé par** la détection (S33) du fait qu'un niveau de dimensionnement précédemment réglé pour une interface est atteint sans aucune enfreinte à la qualité mesurée sur des chemins faisant intervenir cette interface et par l'utilisation (S35) des informations stockées de précédentes mesures de bout en bout et de précédents niveaux d'enregistrement, la sélection (S37) d'au moins une autre interface qui a probablement provoqué l'enfreinte à la qualité mesurée lorsque le niveau de dimensionnement précédemment réglé a été réglé et la suppression (S39) ou l'augmentation du niveau de dimensionnement pour l'interface précédemment sélectionnée et au lieu de cela la fourniture d'un niveau de dimensionnement à chaque nouvelle interface sélectionnée ou, s'il n'existe pas d'autres interfaces potentiellement surchargées, l'augmentation (S39) du niveau de dimensionnement limitatif.

6. Le procédé selon l'une des revendications 1 à 5, **caractérisé en ce que** la définition (S23) d'un nouveau niveau de dimensionnement ou le réglage (S21) d'un niveau de dimensionnement déjà existant pour l'au moins une interface sélectionnée est réalisé(e) en réglant le niveau de dimensionnement à un niveau égal au niveau d'enregistrement pour l'interface au moment de l'enfreinte à la qualité détectée.

7. Le procédé selon l'une des revendications 1 à 5, **caractérisé en ce que** la définition (S23) d'un nouveau niveau de dimensionnement ou le réglage (S21) d'un niveau de dimensionnement déjà existant pour l'au moins une interface sélectionnée est réalisé(e) en réglant le niveau de dimensionnement à un niveau inférieur au niveau d'enregistrement dans l'interface au moment de l'enfreinte à la qualité détectée et soit en préemptant quelques réservations pour atteindre le niveau de dimensionnement soit en attendant que quelques réservations se libèrent pour atteindre le niveau de dimensionnement.

8. Le procédé selon la revendication 6 ou 7, **caractérisé en ce que** le niveau de dimensionnement est réglé soit à un niveau égal soit à un niveau inférieur au niveau d'enregistrement de l'interface au moment de l'enfreinte à la qualité détectée, selon le niveau d'enfreinte à la qualité qui a été mesuré.

9. Noeud dans un réseau de données, ledit noeud étant apte à commander la qualité de transmission dans le réseau et comprend des moyens de réception (57) aptes à recevoir des informations de mesures de bout en bout d'une qualité de transmission réalisées dans le réseau, où les moyens de réception (57) sont en outre aptes à recevoir des informations de la topologie du réseau et des informations de niveaux d'enregistrement et de capacité de transmission pour des interfaces dans le réseau et où il comprend en outre :
- des moyens de sélection (59) connectés aux moyens de réception (57) et aptes à combiner des informations provenant des mesures de bout en bout avec les informations de topologie et les informations de niveaux d'enregistrement pour sélectionner au moins une interface potentiellement surchargée comprise dans au moins un chemin où des enfreintes à la qualité ont été détectées par des mesures de bout en bout ;
**caractérisé en ce que** les moyens de réception (57) comprennent en outre :
- des moyens de définition et de réglage de niveau de dimensionnement (61) connectés aux moyens de sélection (59) et aptes à définir un nouveau niveau de dimensionnement ou régler un niveau de dimensionnement déjà existant pour l'au moins une interface sélectionnée, ledit niveau de dimensionnement définissant une somme maximale admise de ressources de transmission demandées directement ou indirectement par des applications pour leurs flux de données d'application (ADF) pour la / les interface/s, de sorte que l'emploi de chaque chemin détecté comme présentant des enfreintes à la qualité de transmission soit limité sur une ou plusieurs interfaces.

10. Le noeud selon la revendication 9, **caractérisé en ce qu'**il est apte à itérer le processus de définition et de réglage de niveaux de dimensionnement pour améliorer les réglages des niveaux de dimensionnement dans le système.

11. Le noeud selon la revendication 9 ou 10, **caractérisé en ce qu'**il comprend des moyens de stockage (63) connectés aux moyens de réception (57) et aux moyens de sélection (59), lesdits moyens de stockage (63) étant aptes à stocker des informations sur de précédentes mesures de bout en bout et de précédents niveaux d'enregistrement pour les interfaces.

12. Le noeud selon la revendication 11, **caractérisé en ce que** les moyens de sélection (59) sont aptes à récupérer des informations à partir des moyens de stockage (63) afin d'utiliser un historique de précédents niveaux d'enregistrement avec éventuellement toutes enfreintes à la qualité, capacités de transmission et/ou niveaux de dimensionnement associés pour les interfaces pour la sélection d'au moins une interface potentiellement surchargée.

13. Le noeud selon la revendication 11 ou 12, **caractérisé en ce que** les moyens de réception (57) sont en outre aptes à recevoir des informations sur le fait qu'un niveau de dimensionnement précédemment réglé dans une interface est atteint sans aucune enfreinte à la qualité mesurée sur des chemins faisant intervenir cette interface et **en ce que** les moyens de sélection (59) sont aptes, moyennant les informations stockées de précédentes mesures de bout en bout et de précédents niveaux d'enregistrement, à sélectionner au moins une autre interface qui a probablement provoqué l'enfreinte à la qualité mesurée lorsque le niveau de dimensionnement précédemment réglé a été réglé et les moyens de définition et de réglage (61) sont aptes à supprimer ou augmenter le niveau de dimensionnement pour l'interface précédemment sélectionnée et au lieu de cela fournir un niveau de dimensionnement à chaque nouvelle interface sélectionnée ou, s'il n'existe pas d'autres interfaces potentiellement surchargées, augmenter le niveau de dimensionnement limitatif.

14. Le noeud selon l'une des revendications 9 à 13, **caractérisé en ce que** les moyens de définition et de réglage (61) sont aptes à régler le niveau de dimensionnement à un niveau égal au niveau d'enregistrement pour l'interface au moment de l'enfreinte à la qualité détectée.

15. Le noeud selon l'une des revendications 9 à 13, **caractérisé en ce que** les moyens de définition et de réglage (61) sont aptes à régler le niveau de dimensionnement à un niveau inférieur au niveau d'enregistrement pour l'interface au moment de l'enfreinte à la qualité détectée et soit en préemptant quelques réservations pour atteindre le niveau de dimensionnement soit en attendant que quelques réservations se libèrent pour atteindre le niveau de dimensionnement.

16. Le noeud selon la revendication 14 ou 15, **caractérisé en ce que** les moyens de définition et de réglage (61) sont aptes à choisir l'un des procédés de réglage de niveau de dimensionnement décrits selon le niveau d'enfreinte à la qualité qui a été mesuré.

17. Produit de programme informatique directement chargeable dans la mémoire interne d'un moyen de traitement dans un ou plusieurs noeuds dans un réseau de données, comprenant les moyens de code logiciel pour la réalisation des étapes de l'une quelconque des revendications 1 à 8.

18. Produit de programme informatique enregistré sur un support utilisable par ordinateur, comprenant un programme lisible pour faire en sorte qu'un moyen de traitement dans un ou plusieurs noeuds dans un réseau de données commande une exécution des étapes de l'une quelconque des revendications 1 à 8.
